# EUROPÄISCHE PATENTSCHRIFT

(11) **EP 0 742 238 B1**
(45) Veröffentlichungstag und Bekanntmachung des Hinweises auf die Patenterteilung: **08.08.2001**
(21) Anmeldenummer: 96106605.7
(22) Anmeldetag: 26.04.1996
(51) Int. Cl.: C08G 18/10, C08G 18/62, G11B 5/702

(54) **Als Dispergierharze geeignete polymere Massen**
Polymer compositions suitable for use as dispersing resins
Composition de polymère et leur utilisation comme résines de dispersion

(30) Priorität: 11.05.1995 DE 19516784
(43) Veröffentlichungstag der Anmeldung: 13.11.1996
(73) Patentinhaber: EMTEC Magnetics GmbH, 67059 Ludwigshafen (DE)
(72) Erfinder: Brodt, Gregor, Dr., 64646 Heppenheim (DE); Schelble, Josef, Dr., 77652 Offenburg (DE); Lehner, August, 67127 Rödersheim-Gronau (DE); Weingart, Franz, Dr., 69181 Leimen (DE); Kohl, Albert, 67229 Laumersheim (DE); Kress, Ria, Dr., 67063 Ludwigshafen (DE); Schneider, Norbert, 67122 Altrip (DE)

(56) Entgegenhaltungen:
- EP-A- 0 033 900
- EP-A- 0 547 432
- EP-A- 0 592 905
- DE-A- 4 433 931
- GB-A- 1 339 930
- GB-A- 2 285 985
- DATABASE WPI Section Ch, Week 8229 Derwent Publications Ltd., London, GB; Class A85, AN 82-59959E XP002008614 & JP-A-57 092 422 (SONY CORP) , 9.Juni 1982

## Beschreibung

Die vorliegende Erfindung betrifft als Dispergierharze geeignete polymere Massen I, erhältlich durch Umsetzung von
1)einem Polymerisat II aus
   a) 80 bis knapp 100 mol-% eines oder mehrerer C₁-C₂₅-Alkylester einer α,β-ungesättigten Carbonsäure,
   b) 0 bis 20 mol- % eines oder mehrerer weiterer Monomerer und
   c) einem Starter und/oder Regler, durch welchen die Mehrzahl der Polymerketten des Polymerisats II an einem ihrer Enden durch eine Hydroxylgruppe terminiert wird,
2) mit einem mehrwertigen nicht-aromatischen Isocyanat III zu einem Umsetzungsprodukt IV, wobei die Menge der Isocyanatgruppen 1,2 bis 3,9 mol pro Mol der Hydroxylgruppen von II beträgt,
3) und Umsetzung von IV mit
   a) einer gegenüber Isocyanaten reaktive Gruppen enthaltenden Verbindung V, die ausgewählt ist aus der Gruppe bestehend aus Thioaminen, Aminoalkoholen und mehrwertigen nicht-aromatischen Aminen oder einem Gemisch daraus, zu einem Umsetzungsprodukt VI wobei die Menge der reaktiven Gruppen 2 bis 7 mol pro Mol der in IV noch vorhandenen freien Isocyanatgruppen beträgt, und weiterer Umsetzung von VI mit einer Verbindung VII, die im Molekül eine oder mehrere saure Gruppen trägt, oder aus der Gruppe bestehend aus Estern oder Salzen von Säuren ausgewählt ist, oder einem Gemisch daraus, zum Polymerisat I, oder mit
   b) einer gegenüber Isocyanaten reaktive Gruppen enthaltenden Verbindung VIII, die ausgewählt ist aus der Gruppe bestehend aus Phosphorsäureestern, Phosphonsäureestern und Salzen von Sulfonsäurederivaten, oder einem Gemisch daraus, zum Polymerisat I,

Ferner betrifft die Erfindung ein Verfahren zur Herstellung der polymeren Massen I, ihre Verwendung als Dispergierharze für pigmenthaltige Beschichtungen, Pigmentzubereitungen aus einem Pigment und einer polymeren Masse I sowie magnetische Aufzeichnungsmaterialien, enthaltend Magnetpigmente, die mit den polymeren Massen I als Dispergierharz ausgerüstet sind.

Wäßrige und organische Suspensionen, die ein Farb- oder Magnetpigment und ein Bindemittel enthalten, finden vielfache Anwendung zur Herstellung von farbigen bzw. magnetischen Lacken (Ullmann's Encyclopedia of Industrial Chemistry, 5. Ed., Vol. 20; S. 243-369, VCH Publishers Inc., Weinheim-New York, 1992).

In derartigen Suspensionen soll das Pigment in der Regel sehr feinteilig sein und bleiben, ferner soll es sich schnell dispergieren lassen, und außerdem sollen die Suspensionen stabil bleiben. Da sich diese Forderungen mit reinen Pigmenten in aller Regel nicht erfüllen lassen, ist es zweckmäßig, die reinen Pigmente zunächst in eine entsprechende geeignete Gebrauchsform zu überführen, wobei es sich meistens um Pigmentzubereitungen mit einem sogenannten Dispergierharz handelt.

Als Dispergierharze kommen grundsätzlich Polymere mit sauren oder basischen Gruppen in Betracht. Insbesondere anorganische Pigmente wie Magnetpigmente lagern sich an diese sogenannten Ankergruppen an, so daß die organophilen Teile der Harz-Moleküle nach außen ragen und die Pigmentteilchen auf diese Weise mit dem Bindemittel, in welches sie eingebettet sind, verträglich machen.

In der älteren deutschen Anmeldung P 4333292.7 wurden Polymere als Dispergierharze vorgeschlagen, welche dem oben genannten Umsetzungsprodukt VI im Wesentlichen entsprechen.

In der EP 592905 wird ein magnetischer Aufzeichnungsträger beschrieben, der als ein Bindemittel ein Polyurethanharnstoff(meth)acrylat enthält, welches durch die Umsetzung eines Polyacrylats mit bis zu 2 OH-Endgruppen pro Mol und einem Molekulargewicht zwischen 200 und 50 000 mit einem Gemisch aus aliphatischen Polyisocyanaten mit einer mittleren Funktionalität von 3,0 bis 6 NCO-Gruppen pro Mol, bestehend aus 0,1 bis 10 Gew.-% eines Diisocyanats, 20 bis 80 Gew.-% eines Triisocyanats und 20 bis 60 Gew.-% eines Isocyanats mit einer Funktionalität von 4 bis 10, mit der Maßgabe, daß pro OH-Gruppe 1,2 bis 3,0 NCO-Gruppen zur Reaktion gelangen und die restlichen NCO-Gruppen mit Aminoalkyltrialkoxisilanen in substituierte Harnstoffgruppen überführt werden, erhalten wird.

Die EP 547432 bezieht sich auf magnetische Aufzeichnungsträger, bestehend aus einem nichtmagnetischen Trägermaterial und mindestens einer darauf hafifest aufgebrachten magnetisierbaren Schicht auf Basis eines in mindestens einem Polyurethan und einem Polyurethanharnstoff(meth)acrylat dispergierten magnetischen Materials, wobei das Polyurethanharnstoff(meth)acrylat erhalten wird durch Umsetzen eines hydroxylgruppenhaltigen Poly(meth)acrylats mit einem Gemisch aus Di- und Polyisocyanaten und Überführen der restlichen NCO-Gruppen mit Ammoniak oder primären oder sekundären Aminen zu Harnstoffgruppen.

Im JP-A-57 092 422 wird ein Polyurethanharz oder Polyesterharz beschrieben, welches über ≥ 1 hydrophile Gruppen verfügt, ein Molekulargewicht von 200-50 000 pro hydrophiler Gruppe aufweist und als Bindemittel in magnetischen Schichten für magnetische Aufzeichnungsmaterialien enthalten ist.

Im GB 1 339 930 wird ein Polymermaterial der Struktur 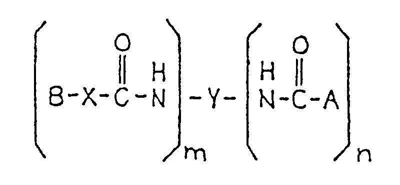 worin
- B: ein Polymersegment aus einem oder mehreren ethylenisch ungesättigten Monomeren, die keine Zerewitinoff-Wasserstoffatome aufweisen;
- X: den Rest eines Kettenüberträgers;
- Y: den Rest eines Di-, Tri-, oder Tetraisocyanatradikals;
- A: ein saures Radikal, welches von einer Säure mit einem pKa-Wert von -1 bis 6 abgeleitet wurde, oder ein basisches Radikal, welches von einer Base mit einem pKa-Wert von 5 bis 14 abgeleitet wurde, und/oder ein Salz eines derartigen basischen Radikals, darstellt und m und n 1, 2 oder 3 (insgesamt 4 nicht übersteigend) bedeutet, mit der Maßgabe, daß wenn n 2 oder 3 ist, nur eine der Gruppen A wie angeführt beschaffen sein muß, vorgeschlagen.

Dabei ist A bevorzugt ein Mercapto-, Hydroxy- oder Carboxy- substituiertes Carbonsäureradikal.

Der Erfindung lagen Dispergierharze als Aufgabe zugrunde, mit denen sich insbesondere stabile Zubereitungen von anorganischen Pigmenten wie Magnetpigmenten herstellen lassen.

Demgemäß wurden die eingangs definierten polymeren Massen I, ein Verfahren zu ihrer Herstellung, Pigmentzubereitungen aus einem Pigment und einer polymeren Masse I sowie magnetische Aufzeichnungsmaterialien, welche Magnetpigmente enthalten, die mit einer polymeren Masse I ausgerüstet sind, gefunden.

Als Monomere (a), aus welchen die Polymerisate II größtenteils aufgebaut sind, kommen in erster Linie Ester von α,β-ungesättigten Carbonsäuren der Formel 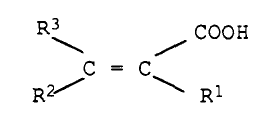 in Betracht, in der R¹, R² und R³ Wasserstoff oder C₁-C₄-Alkylreste darstellen, wobei Acrylsäure und Methacrylsäure bevorzugt sind. Es können auch Gemische von Estern verschiedener solcher Carbonsäuren eingesetzt werden.

Als Alkoholkomponente der Alkylester eignen sich neben den C₉-C₂₅-Alkanolen wie Nonanol, Stearylalkohol und Laurylalkohol bevorzugt die C₁-C₈-Alkanole, insbesondere Methanol und n-Butanol, sowie Gemische verschiedener solcher Alkanole.

Als weitere Comonomere (b) kommen für den Aufbau der Polymerisate II bis zu 20, vorzugsweise 0 bis 5 mol-% solcher Monomerer in Betracht, durch welche die mechanischen, thermischen und chemischen Eigenschaften der Polymerisate, die nur aus dem Monomeren (a) aufgebaut sind, abgewandelt aber nicht wesentlich geändert werden.

Derartige Monomere sind beispielsweise olefinisch ungesättigte aromatische Kohlenwasserstoffe wie Styrol und α-Methylstyrol, ungesättigte Nitrile wie Acrylnitril und Methacrylnitril, halogenierte Olefine wie Vinylchlorid, Vinylalkoholderivate wie Vinylacetat sowie insbesondere Monoester der genannten α,β-ungesättigten Carbonsäuren mit mehrwertigen Alkoholen wie Ethandiol, Propan-1,2-diol, Propan-1,3-diol, den Butandiolen, Glycerin sowie Gemischen dieser Alkohole.

Ferner kommen bifunktionelle Monomere in geringen Mengen in Betracht, durch welche eine leichte Vernetzung der Polymerisate ohne Beeinflussung von deren Eigenschaften als Thermoplasten bewirkt wird, z.B. Butadien, Divinylbenzol und die mehrfachen Ester von α,β-ungesättigten Carbonsäuren mit den vorgenannten mehrwertigen Alkoholen.

Erfindungsgemäß sollen die Polymerketten von II mit einer Hydroxylgruppe terminiert werden. Man erreicht dies mit Initiatoren (Startern), welche beim Zerfall ein Hydroxyl-Radikal (·OH-Radikal) liefern und/oder mit Reglern, die eine Hydroxylfunktion enthalten.

Initiatoren dieser Art sind z.B. tert.-Butylhydroperoxid, Tetrahydrofuranhydroperoxid, Cumolhydroperoxid oder 2,2'-Azobis(2-methyl-N-(2-hydroxyethyl)propionamid).

Führt man die Hydroxylgruppe nur über einen Regler ein, können auch andere Initiatoren verwendet werden, z.B. Azo-bis-(iso-butyronitril), Di(tert.-butyl)peroxid, Didodecanoylperoxid, Dibenzoylperoxid, Peressigsäure-tert.-butylester oder 2-Methyl-perpropionsäure-tert.-butylester.

Geeignete Regler sind Aminoalkohole, Aminophenole sowie insbesondere Thioalkanole wie 3-Hydroxy-propanthiol, 2-Hydroxyethyl-3-mercaptopropionsäureester und vor allem 2-Hydroxy-ethanthiol (Mercaptoethanol).

Es können auch Gemische verschiedener Starter und/oder Regler eingesetzt werden.

Initiatoren und Regler werden in den üblichen Mengen eingesetzt, und zwar in der Regel von 0,1 bis 4,8 Gew.-% bzw. von 0,1 bis 5 Gew.-% bezogen auf das eingesetzte Gemisch aus den Monomeren (a) und (b). Da der Anteil der von den Initiatoren bzw. Reglern stammenden Endgruppen der Polymerketten nur etwa 0,05 bis 5 mol-% beträgt, wurden diese Mengen bei der Angabe der quantitativen Zusammensetzung des Polymeren II aus Gründen der besseren Übersichtlichkeit außer Betracht gelassen.

Man kann die Polymeren II nach allen bekannten Polymerisationsmethoden herstellen, also z.B. durch Substanzpolymerisation, Dispersionspolymerisation sowie vorzugsweise durch Lösungspolymerisation.

Als Lösungsmittel eignen sich Ester wie Essigsäureethylester, Kohlenwasserstoffe wie Toluol, sowie insbesondere cyclische Ether wie Tetrahydrofuran und Dioxan.

Die Polymerisation wird in der Regel bei erhöhter Temperatur, bevorzugt bei 40 bis 125°C durchgeführt, wodurch sich Reaktionszeiten von 2 bis 7 Stunden ergeben.

Die Polymerisate II können aus dem Reaktionsgemisch nach bekannten Methoden, z.B. durch Extraktion oder Fällung, isoliert oder vorzugsweise ohne Isolierung zur Weiterverarbeitung eingesetzt werden.

Zur Herstellung der Umsetzungsprodukte IV wird ein Polymerisat II mit einem mehrwertigen nicht-aromatischen Isocyanat III oder einem Gemisch solcher Isocyanate umgesetzt, wobei die Menge der Isocyanatgruppen 1,2 bis 3,9, vorzugsweise 2,0 bis 3,2, mol pro Mol der Hydroxylgruppen von II beträgt. Die Menge der Hydroxylgruppen im fertigen Polymerisat II entspricht in der Regel einer Hydroxylzahl von 10 bis 20 mg KOH/g II (nach DIN 53240), was seinerseits 0,17 bis 0,36 mmol Hydroxylgruppen pro Gramm II entspricht.

Als mehrwertige, nicht-aromatische Isocyanate können vorteilhaft offenkettige Isocyanate wie 1,6-Diisocyanatohexan, cyclische Isocyanate wie 1,3-Di(isocyanatomethyl)cyclohexan, oligomere, freie Isocyanatgruppen tragende Harnstoffderivate, z.B. Umsetzungsprodukte aus 3 mol 1,6-Diisocyanatohexan und 1 mol Wasser oder oligomere, freie Isocyanatgruppen tragende Urethane eingesetzt werden.

Die Herstellung von IV durch Umsetzung von II mit III kann vorteilhaft in den zur Herstellung von II geeigeneten Lösungsmitteln durchgeführt werden.

Die Reaktion kann ohne Katalysator oder bevorzugt in Anwesenheit eines Katalysators wie einem tert. Amin, insbesondere Triethylamin, wie einem Metallsalz, insbesondere Zinnoctoat oder Bleioctoat oder wie einer metallorganischen Verbindung, insbesondere Dibutylzinndilaurat oder Titantetramethylat durchgeführt werden.

Die Reaktion wird in der Regel bei erhöhter Temperatur, bevorzugt 60 bis 125°C durchgeführt, entsprechend Reaktionszeiten von etwa 0,2 bis 5 Stunden.

Die Umsetzungsprodukte IV können aus dem Reaktionsgemisch nach bekannten Methoden, z.B. Extraktion oder Fällung, isoliert oder vorzugsweise ohne Isolierung zur Weiterverarbeitung eingesetzt werden.

Zur Herstellung der Umsetzungsprodukte VI wird das Umsetzungsprodukt IV mit einer gegenüber Isocyananten reaktive Gruppen enthaltenden Verbindung V oder einem Gemisch solcher Verbindungen umgesetzt, wobei die Menge der reaktiven Gruppen 2 bis 7, vorzugsweise 2 bis 4, mol pro Mol der in IV noch vorhandenen freien Isocyanatgruppen beträgt von IV beträgt. Die Zahl der freien Isocyanatgruppen kann dabei nach DIN EN 1242 bestimmt werden.

Als gegenüber Isocyananten reaktive Gruppen kommen viele Substanzklassen in Betracht, z.B. Mercaptane, Alkohole oder Amine. Es können Verbindungen V eingesetzt werden, die mehrere gleiche oder unterschiedliche Gruppen dieser Art enthalten.

Beispiele für derartige Verbindungen sind, wie allgemein bekannt, Thioamine wie (2-Mercaptoethyl)methylamin, Alkohole wie 1,2-Propandiol, Glycerin, 2,2-Di(hydroxymethyl)-1-butanol, Aminoalkohole wie Aminoethanol, N-Methylaminoethanol, 4-(3-Aminopropyl)benzylalkohol, N-(3-Hydroxylpropyl)piperidin, oder mehrwertige insbesondere nicht-aromatische Amine.

Als mehrwertige, nicht-aromatische Amine können vorteilhaft offenkettige Amine wie Ethylendiamin, Diethylentriamin, insbesondere Triethylentetraamin oder cyclische Amine wie Piperazine oder 4-Aminopiperidine insbesondere 2,2,5,5-Tetramethyl-4-aminopiperidin oder polycyclische Amine eingesetzt werden.

Derartige Amine sind allgemein bekannt.

Als besonders vorteilhaft haben sich Amine der Formel

H₂N(-CH₂-CH₂-NH)ₓ-H Va

in der x einen Wert von 2 bis 6 hat, oder der Formel

H₂N-CH₂-CH₂-CH₂-NH(-CH₂-CH₂-NH)_{y}-CH₂-CH₂-CH₂-NH₂ Vb

in der y einen Wert von 0 bis 4 hat, erwiesen.

Die Verbindungen Va sind in an sich bekannter Weise durch Oligomerisation von Ethylenimin in Anwesenheit von Ammoniak erhältlich, und die Verbindungen Vb können durch Umsetzung von 2 mol Acrylnitril mit 1 mol Ammoniak oder einer Verbindung Va und anschließende Hydrierung der Nitrilfunktionen hergestellt werden.

Die Reaktion kann in Anwesenheit von Katalysatoren wie einem tert. Amin, insbesondere Tributylamin oder 1,4-Diazabicyclo-(2,2,2)octan, oder wie einer metallorganischen Verbindung, insbesondere Dibutylzinndilaurat, in Mengen von 1 bis 500, insbesondere 1 bis 50 Gew.-ppm bezogen auf IV, oder bevorzugt ohne Katalysator durchgeführt werden.

Die Herstellung von VI durch Umsetzung von IV mit V kann lösungsmittelfrei oder vorteilhaft in Gegenwart eines organischen Lösungsmittels wie einem Kohlenwasserstoff insbesondere Toluol oder Cyclohexan, wie einem Ester insbesondere Essigsäureethylester, wie einem Ether insbesondere Diisopropylether oder Methyl-tert.-butylether oder bevorzugt einem cyclischen Ether, insbesondere Tetrahydrofuran oder Dioxan durchgeführt werden.

In manchen Fällen kommt auch Wasser in Betracht.

Die Reaktion wird in der Regel bei 10 bis 70°C, bevorzugt 20 bis 40°C durchgeführt, wodurch sich Reaktionszeiten von etwa 0,1 bis 2 Stunden ergeben.

Die Umsetzungsprodukte VI können aus dem Reaktionsgemisch nach bekannten Methoden, z.B. durch Extraktion oder Fällung, isoliert oder vorzugsweise ohne Isolierung zur Weiterverarbeitung eingesetzt werden.

Zur Herstellung der Polymerisate I wird das Umsetzungsprodukt VI mit einer Verbindung VII, die mit den noch freien reaktiven Gruppen in VI reagiert und durch welche saure Gruppen in VI eingeführt werden, oder Gemischen solcher Verbindungen umgesetzt. Die Zahl der freien reaktiven Gruppen kann im Falle der Aminogruppen dabei nach DIN 53176 und im Falle der Hydroxylgruppen nach DIN 53240 bestimmt werden.

Als mit den reaktiven Gruppen reagierende Stoffe VII können viele Substanzklassen eingesetzt werden, z.B. Alkylhalogenide, Amide, Epoxide, Ester, Ketone oder Isocyanate, die im Molekül eine oder mehrere saure Gruppen oder Gruppen, die leicht in saure Gruppen übergehen, tragen.

Saure Gruppen sind besonders Sulfonsäure-, Phosphonsäure-, Phosphorsäure sowie vor allem Carboxylgruppen.

Beispiele für derartige Verbindungen sind Alkylhalogenide wie Chloressigsäure, Amide wie Bernsteinsäuremonoamid, Epoxide wie Glycidsäure, Ester wie Phthalsäuremonomethylester oder Ketone wie Acetylessigsäure.

Besonders gut geeignete Verbindungen VII sind die inneren Anhydride von mehrwertigen Carbonsäuren wie Maleinsäureanhydrid, Bernsteinsäureanhydrid, Phthalsäureanhydrid und Adipinsäureanhydrid, welche beispielsweise mit Aminogruppen von VI Amidogruppen bilden, die mit einer Carbonylgruppe substituiert sind.

Im Falle von Hydroxylgruppen als reaktiven Gruppen können vorteilhaft neben den gennanten Carbonsäuren und Carbonsäurederivaten auch anorganische Säuren, insbesondere Mineralsäuren wie Phosphorsäure sowie die Oligomeren und Polymeren solcher Säuren, oder Derivate wie Ester oder Salze solcher Säuren, durch die saure Gruppen in die Verbindung VI eingeführt werden, oder Gemische solcher Verbindungen als Verbindung VII eingesetzt werden.

Man setzt diese Verbindungen in an sich bekannter Weise mit den reaktiven Gruppen der Polymeren VI um.

Die Herstellung von I durch Umsetzung von VI mit VII kann lösungsmittelfrei oder vorteilhaft in Gegenwart eines organischen Lösungsmittels wie eines Kohlenwasserstoffs, insbesondere Toluol, Cyclohexan oder Hexan, wie eines Esters, insbesondere Essigsäureethylester, wie eines Ethers, insbesondere Diisopropylether oder Methyl-tert.-butylether, oder bevorzugt eines cyclischen Ethers, insbesondere Tetrahydrofuran oder Dioxan, durchgeführt werden. In manchen Fällen kommt auch Wasser in Betracht.

Die Reaktion wird in der Regel bei 10 bis 60°C, bevorzugt 20 bis 40°C durchgeführt, wodurch sich Reaktionszeiten von etwa 0,1 bis 1,5 Stunden ergeben.

Im Falle der Verwendung von anorganischen Säuren, insbesondere Mineralsäuren wie Phosphorsäure und Schwefelsäure sowie den Oligomeren und Polymeren solcher Säuren, oder von Derivaten wie Estern oder Salzen solcher Säuren, durch die saure Gruppen in die Verbindung VI eingeführt werden, oder Gemischen solcher Verbindungen als Verbindung V kann die Reaktion wie beschrieben oder vorteilhaft in an sich bekannter Weise in Gegenwart eines Lösungsmittels durchgeführt werden, das ein Azeotrop mit Wasser bildet. Als solche Lösungsmittel kommen beispielsweise Aromaten wie Benzol oder Toluol, in Betracht. Es können auch Gemische solcher Lösungsmittel eingesetzt werden.

Die Reaktion wird in der Regel bei dem sich unter dem entsprechenden Druck einstellenden Siedepunkt durchgeführt, so daß sich Reaktionszeiten von etwa 1 bis 10 Stunden ergeben.

Das Polymerisat I kann aus der Reaktionsmischung nach bekannten Methoden, z.B. Extraktion oder Fällung, isoliert werden. Vorzugsweise verwendet man die Reaktionsmischung aber unmittelbar für die Herstellung der Pigmentzubereitungen.

Zur Herstellung des Polymerisats I kann die Verbindung IV erfindungsgemäß mit einer Verbindung VIII umgesetzt werden, die mindestens eine gegenüber Isocyanaten reaktive Gruppe aufweist und die im Molekül eine oder mehrere saure Gruppen oder Gruppen, die leicht in saure Gruppen übergehen, tragen. Es können auch Gemische verschiedener Verbindungen VIII eingesetzt werden.

Als Verbindung mit Gruppen, die gegenüber Isocyanaten reaktiv sind, kommen viele Substanzklassen in Betracht, z.B. Mercaptane, Alkohole oder Amine. Es können auch Verbindungen VIII eingesetzt werden, die mehrere gleiche oder unterschiedliche Gruppen dieser Art enthalten.

Saure Gruppen sind die Sulfonsäure-, Phosphonsäuregrappe. Gruppen, die leicht in saure Gruppen übergehen, sind beispielsweise die Estergruppe oder Salze, vorzugsweise der Alkalimetalle wie Natrium oder Kalium.

Beispiele für derartige Verbindungen V sind Phosphorsäurederivate, vorzugsweise Hydroxyalkyl-Phosphorsäureester wie Phosphorsäure-mono-(bis-(2,3-hydroxymethyl))-butylester oder Oligoethylenglykol-Phosphorsäureester, Aminoalkyl-Phosphorsäureester wie Phosphorsäure-mono-(2-aminoethyl)-ester-Natriumsalz, Phosphonsäurederivate, vorzugsweise Hydroxyalkyl-Phosphonsäureester wie Bis-(N-2-hydroxyethyl)-aminoethyl-phosphonsäure-diethylester, Aminoalkyl-Phosphonsäureester wie 3-Aminopropyl-Phosphonsäurediethylester oder Sulfonsäurederivate, vorzugsweise Hydroxysulfonsäuren wie 3-Hydroxypropansulfonsäure oder Aminosulfonsäuren wie N-Methyltaurin.

Die Reaktion kann in Anwesenheit von Katalysatoren, beispielsweise einem tert. Amin wie Tributylamin oder 1,4-Diazabicyclo(2,2,2)octan oder beispielsweise einer metallorganischen Verbindung wie Dibutylzinndilaurat, in Mengen von 1 bis 500, insbesondere 1 bis 50 Gew.-ppm bezogen auf IV, oder bevorzugt ohne Katalysator durchgeführt werden.

Die Herstellung von I durch Umsetzung von IV mit VIII kann lösungsmittelfrei oder vorteilhaft in Gegenwart eines organischen Lösungsmittels vorgenommen werden. Als Lösungsmittel eignen sich Kohlenwasserstoffe, insbesondere Toluol und Cyclohexan, Ester, insbesondere Ethylacetat, Ether, insbesondere Diisopropylether und Methyl-tert.-butylether, sowie bevorzugt cyclische Ether, insbesondere Tetrahydrofuran oder Dioxan.

In manchen Fällen kommt auch Wasser in Betracht.

Die Reaktion wird in der Regel bei 10 bis 70°C, bevorzugt 20 bis 60°C durchgeführt, wodurch sich Reaktionszeiten von etwa 0,1 bis 2 Stunden ergeben.

Entsprechend ihrer stufenweisen Herstellung bestehen die erfindungsgemäßen Polymerisate I aus einer organophilen polymeren Hauptkette, die sich an einem ihrer Enden mehrfach verzweigt, wobei die Vielzahl der äußersten Zweige saure Gruppen oder Gruppen, die leicht in saure Gruppen übergehen, trägt. Diese sauren Gruppen haben zu zahlreichen Pigmenten, insbesondere oxidischen anorganischen Pigmenten eine starke Affinität und lagern sich daher an deren Oberfläche an. Als Folge hiervon enthält man aus den Pigmenten und den Polymeren I durch übliches intensives Vermischen Pigmentzubereitungen mit einer organophilen Hülle.

Zur Herstellung der Pigmentzubereitungen werden die Pigmente, insbesondere Farb- und Magnetpigmente mit den polymeren Massen I und gegebenenfalls Zusatzstoffen lösungsmittelfrei oder vorzugsweise in Gegenwart eines organischen Verdünnungsmittels in an sich bekannter Weise vermischt. Als Verdünnungsmittel eignen sich Kohlenwasserstoffe, insbesondere Toluol und Cyclohexan, Ketone, insbesondere Methylethylketon und Cyclohexanon, Ester, insbesondere Essigsäureethylester, sowie Ether, insbesondere Tetrahydrofuran oder Dioxan. In manchen Fällen kommt auch Wasser in Betracht.

Die Pigmentzubereitung kann aus dem Gemisch durch Entfernen des Verdünnungsmittels isoliert oder vorzugsweise ohne Isolierung zur Weiterverarbeitung eingesetzt werden.

Die Pigmentzubereitungen lassen sich bequem und ohne unerwünschte Agglomerationen in organischen Bindemitteln einarbeiten.

Dazu können die Pigmentzubereitungen in an sich bekannter Weise mit einem Bindemittel und'gegebenenfalls Zusatzstoffen lösungsmittelfrei oder vorzugsweise in Gegenwart eines organischen Verdünnungsmittels gemischt werden. Als organisches Verdünnungsmittel eignen sich Kohlenwasserstoffe, insbesondere Toluol, Cyclohexan und n-Alkane, Ketone, insbesondere Methylethylketon, Cyclohexanon und Methylisobutylketon, Ester, insbesondere Essigsäureethylester, sowie Ether, insbesondere Tetrahydrofuran und Dioxan.

Als Bindemittel kommen bekanntermaßen Polyurethane, Polyacrylate, Polymethacrylate, Polyacrylamid, Vinylpolymere wie Polystyrol, Polyvinylchlorid, Polyvinylacetat, Polyvinylpropionat und Polyacrylnitril, cellulosehaltige Bindemittel wie Celluloseester, insbesondere Cellulosenitrate, Celluloseacetate, Celluloseacetopropionat und Celluloseacetobutyrat, Phenoxyharze und Epoxyharze in Betracht.

Als Zusatzstoffe finden bekanntermaßen Füllstoffe wieanorganische und organische Pigmente, z.B. Aluminiumoxid, Siliziumdioxid, Titandioxid, Ruß, Polyethylen, Polypropylen, Kreidungsinhibitoren, z.B. Antimonoxid, thixotrope Substanzen, z.B. amorphe Kieselsäure, Anwendung.

Die Mischungen aus Pigmentzubereitung, Bindemittel und gegebenenfalls Zusatzstoffen oder Lösungsmitteln dienen in üblicher Weise als Beschichtungsmittel.

Die Beschichtungsmittel können dabei die erfindungsgemäßen Pigmentzubereitungen allein oder im Gemisch mit anderen Pigmenten oder Pigmentzubereitungen enthalten.

Besondere Bedeutung haben derartige Beschichtungsmittel bei der Herstellung magnetischer Aufzeichnungsmaterialien. Dazu können Pigmentzubereitungen aus einem magnetischen Pigment und einer polymeren Masse I gegebenenfalls mit Füllstoffen in an sich bekannter Weise in einer Mischung aus einem Lösungsmittel oder Verdünnungsmittel, einem Bindemittel und weiteren Zusatzstoffen wie einem Gleitmittel dispergiert und auf eine unmagnetische Trägerschicht aufgetragen werden. Nach der Orientierung der ferromagnetischen Pigmente in einem starken Magnetfeld kann die weitere Verarbeitung wie üblich erfolgen, z.B. durch Entfernen des Lösungsmittels und, falls das Bindemittel vernetzbar ist, Aushärten des Bindemittels mit abschließendem Kalandrieren.

Als magnetische Pigmente kommen die üblichen oxidischen Pigmente wie γ-Fe₂O₃, γ-Fe₃O₄ und CrO₂ oder metallischen Pigmente wie Fe, Co und Ni in Betracht. Diese Pigmente können, wie allgemein bekannt ist, weitere chemische Elemente oder Verbindungen enthalten.

Als Lösungsmittel oder Verdünnungsmittel können wie üblich Wasser, Ether wie Tetrahydrofuran oder Dioxan, Ketone wie Methylethylketon oder Cyclohexanon, Ester wie Ethylacetat oder Kohlenwasserstoffe wie Alkane oder Aromaten oder Mischungen solcher Verbindungen eingesetzt werden.

Als Gleitmittel finden üblicherweise Carbonsäuren mit 10 bis 20 Kohlenstoffatomen, insbesondere Stearinsäure oder Palmitinsäure, oder Derivate von Carbonsäuren, wie deren Salze, Ester und Amide Anwendung.

Als nichtmagnetische und nichtmagnetisierbare Träger lassen sich die üblichen starren oder flexiblen Trägermaterialien verwenden, insbesondere Folien aus linearen Polyestern wie Polyethylenterephthalat, die im allgemeinen Stärken von 4 bis 200 µm und insbesondere von 6 bis 36 µm haben.

Bei der Herstellung magnetischer Aufzeichnungsmaterialien können zur Erzeugung unmagnetischer Schichten, wie Zwischenschichten, Rückschichten und Deckschichten, Pigmentmischungen aus einem unmagnetischen Pigment und einer polymeren Masse I gegebenenfalls mit den für magnetische Beschichtungen beschriebenen Zusätzen in der beschriebenen Weise aufgetragen werden.

Als unmagnetische Pigmente kommen wie üblich Aluminiumoxid, Ruß, Siliziumdioxid, Titandioxid, unmagnetische Chromoxide oder Zirkoniumoxid in Betracht.

Bei der Herstellung magnetischer Aufzeichnungsmaterialien können mehrere Magnetschichten, von denen mindestens eine Schicht eine erfindungsgemäße Pigmentzubereitung enthält, oder mehrere unmagnetische Schichten, von denen mindestens eine Schicht eine erfindungsgemäße Pigmentzubereitung enthält, auf das Trägermaterial aufgebracht werden.

### Beispiel 1

### 1) Herstellung einer polymeren Masse I

466 g Tetrahydrofuran (im folgenden mit "THF" abgekürzt) wurden im Laufe von 2 Stunden bei Siedetemperatur (67°C) mit einer Mischung aus 424 g Methylmethacrylat, 424 g n-Butylmethacrylat, 17,6 g Mercaptoethanol und 2,1 g Azo-bis-(iso-butyronitril) versetzt. Anschließend wurde noch 30 min lang bei 67°C nachgerührt, wonach die Polymerisation mit weiteren 3,5 g des Starters, der in 41 g THF gelöst war, im Laufe von 2 Stunden zu Ende geführt wurde. Das so erhaltene Polymerisat II enthielt 0,26 mmol Hydroxylgruppen pro Gramm Substanz.

Zu der Polymerisatlösung wurde sodann innerhalb von 15 min bei 67°C eine Lösung aus 90 g THF, 0,7 g Hexamethylendiisocyanat, 86 g Biuret des Hexamethylendiisocyanats und 42 g eines mehrwertigen Isocyanats mit durchschnittlich 4,8 Isocyanatgruppen pro Mol gegeben. Nach 30 min wurde die Mischung mit 0,4 g Dibutylzinndilaurat versetzt und noch 4 Stunden weiter bei 67°C gehalten. Das so erhaltene Umsetzungsprodukt IV enthielt noch 0,38 mmol freie Isocyanatgruppen pro Gramm Substanz.

Das Reaktionsgemisch wurde bei 25°C mit einer Lösung aus 625 g THF und 65,4 g N,N'-Bis-(3-Amino-n-propyl)-ethylendiamin versetzt, wobei die Isocyanatgruppen innerhalb von 1 Stunde abreagierten. Das so erhaltene Umsetzungsprodukt VI enthielt 1,04 mmol freie Aminogruppen pro Gramm Substanz, die mit 107 g Maleinsäureanhydrid in Maleinsäuremonoamidgruppen überführt wurden.

Das so erhaltene Polymere I wies einen K-Wert von ca. 22, gemessen in 1 %-iger Lösung in Dimethylformamid auf. Der K-Wert wurde nach H. Fikentscher, Cellulose-Chemie 13(3) (1932) 58-64 bestimmt.

Die Säurezahl des Polymers I (bestimmt nach DIN 53402) betrug 32.

### 2) Herstellung eines Beschichtungsmittels

5,09 g Polymer I, 1,53 g eines handeslüblichen Polyurethanelastomers auf der Basis eines Polyesterols, eines kurzkettigen Alkandiols und 4,4'-Diisocyanato-diphenylmethan, 0,43 g Stearinsäure und 42,5 g eines Reineisenpigments wurden 16 Stunden in einer Kugelmühle mit Keramikkugeln als Mahlmedium in 106,24 g THF dispergiert.

Anschließend wurde eine Lösung von 3,57 g des genannten Polyurethanelastomeren in 20,23 g THF zugegeben und weitere 2 Stunden dispergiert.

Die Dispersion wurde von den Kugeln unter Druck abfiltriert.

### 3) Herstellung eines magnetischen Aufzeichnungsmaterials

Die Dispersion wurde mit einem 40 µm-Rakel bei einer Abzugsgeschwindigkeit von 1 m/s auf eine 24 µm dicke Polyethylenterephthalatfolie aufgebracht.

Nach Ausrichtung der Magnetpigmente wurde der Film bei 80°C getrocknet, kalandriert (70°C, 200 kg/cm) und in 3,81 mm breite Bänder geschnitten.

Die Bänder zeigten hervorragende magnetische Eigenschaften.

### 4) Messung der Stabilität der Dispersion

Zur Messung der Stabilität der Dispersion wurde eine mit 200 ml Dispersion gefüllte 250 ml-Flasche 24 Stunden lang auf ein Rollbrett (Hersteller: Alfred Schwinherr, Schwäbisch Gmünd) gelegt.

Frisch hergestellte und die gelagerte Dispersion wurde mit einem Handrakel auf eine Polyethylenterephthalatfolie mit einem Rz-Wert von 40 bis 50 nm aufgetragen.

Der R_{z}-Wert stellt das arithmetische Mittel der Abweichungen der Oberflächenunebenheiten von der mittleren Oberflächenhöhe dar und als solches ein Maß für die Oberflächenrauhigkeit dar.

Für die frisch hergestellte Dispersion wurde ein Glanzwert von 133, und für die gelagerte Dispersion ein Glanzwert von 130 gemessen.

Die Glanzmessung wurde mit einem Dr. Lange-Reflektometer (Hersteller: Erichsen GmbH&Co.KG, Hemer-Sundwig) nach Betriebsanleitung unter einem Winkel von 60° durchgeführt. Dabei ist die Dispergierung umso besser, je höher die Glanzwerte liegen.

### Beispiel 3

### 1) Herstellung einer polymeren Masse I

Ein Reaktionsgemisch enthaltend das Umsetzungsprodukt IV wurde nach Beispiel 1 hergestellt.

Das Reaktionsgemisch wurde bei 59°C mit einer Lösung von 415,4 g eines Natriumsulfonat-haltigen Ethoxylats/Propoxylats (Tegomer DS 3117, Firma Th. Goldschmidt AG, Essen) in 295 g THF versetzt, wobei die Isocyanatgruppen innerhalb von 1 Stunde abreagierten.

Das so erhaltene Polymere I wies einen K-Wert von ca. 23, gemessen in 1 %-iger Lösung in Dimethylformamid auf.

### 2) Herstellung eines Beschichtungsmittels

Das Bindemittel wurde mit dem Polymer hergestellt, wie in Beispiel 1 beschrieben.

### 3) Herstellung eines magentischen Aufzeichnungsmaterials

Ein magnetisches Aufzeichnungsmaterial wurde hergestellt, wie in Beispiel 1 beschrieben. Die Bänder zeigten hervorragende magnetische Eigenschaften.

### 4) Messung der Stabilität der Dispersion

Für die frisch hergestellte Dispersion wurde ein Glanzwert von 128, und für die gelagerte Dispersion ein Glanzwert von 120 gemessen.

### Beispiel 4

### 1) Herstellung einer polymeren Masse I

Ein Reaktionsgemisch enthaltend das Umsetzungsprodukt IV wurde nach Beispiel 1 hergestellt.

Das Reaktionsgemisch wurde bei 59°C mit einer Lösung von 79,1 g N,N-bis (2-hydroxyethyl)aminomethylphosphonsäurediethylester in 295 g THF versetzt, wobei die Isocyanatgruppen innerhalb von 1 Stunde abreagierten.

Das so erhaltene Polymere I wies einen K-Wert von ca. 19, gemessen in 1 %-iger Lösung in Dimethylformamid auf.

### 2) Herstellung eines Beschichtungsmittels

Das Bindemittel wurde mit dem Polymer hergestellt, wie in Beispiel 1 beschrieben.

### 3) Herstellung eines magentischen Aufzeichnungsmaterials

Ein magnetisches Aufzeichnungsmaterial wurde hergestellt, wie in Beispiel 1 beschrieben.

Die Bänder zeigten hervorragende magnetische Eigenschaften.

### 4) Messung der Stabilität der Dispersion

Für die frisch hergestellte Dispersion wurde ein Glanzwert von 135, und für die gelagerte Dispersion ein Glanzwert von 129 gemessen.

### Beispiel 5

### 1) Herstellung einer polymeren Masse I

Ein Reaktionsgemisch enthaltend das Umsetzungsprodukt IV wurde nach Beispiel 1 hergestellt.

Das Reaktionsgemisch wurde bei 59°C mit einer Lösung von 66,4 g Phosphorsäure-mono(2,2-bis-hydroxmethyl)butylester in 98 g THF versetzt, wobei die Isocyanatgruppen innerhalb von 1 Stunde abreagierten.

Das so erhaltene Polymere I wies einen K-Wert von ca. 18, gemessen in 1 %-iger Lösung in Dimethylformamid auf.

### 2) Herstellung eines Beschichtungsmittels

Das Bindemittel wurde mit dem Polymer hergestellt, wie in Beispiel 1 beschrieben.

### 3) Herstellung eines magentischen Aufzeichnungsmaterials

Ein magnetisches Aufzeichnungsmaterial wurde hergestellt, wie in Beispiel 1 beschrieben.

Die Bänder zeigten hervorragende magnetische Eigenschaften.

### 4) Messung der Stabilität der Dispersion

Für die frisch hergestellte Dispersion wurde ein Glanzwert von 135, und für die gelagerte Dispersion ein Glanzwert von 135 gemessen.

### Beispiel 6

### 1) Herstellung einer polymeren Masse I

Ein Reaktionsgemisch enthaltend das Umsetzungsprodukt IV wurde nach Beispiel 1 hergestellt.

Das Reaktionsgemisch wurde bei 59°C mit einer Lösung von 23,3 g (Methylamino)ethanol in 150 g THF versetzt, wobei die Isocyanat-gruppen innerhalb von 1 Stunde abreagierten. Anschließend wurde die Mischung mit 33,4 g Phosphorsäure versetzt und noch 8 Stunden bei 70°C gehalten.

Das so erhaltene Polymere I wies einen K-Wert von ca. 17, gemessen in 1 %-iger Lösung in Dimethylformamid auf.

### 2) Herstellung eines Beschichtungsmittels

Das Bindemittel wurde mit dem Polymer hergestellt, wie in Beispiel 1 beschrieben.

### 3) Herstellung eines magentischen Aufzeichnungsmaterials

Ein magnetisches Aufzeichnungsmaterial wurde hergestellt, wie in Beispiel 1 beschrieben.

Die Bänder zeigten hervorragende magnetische Eigenschaften.

### 4) Messung der Stabilität der Dispersion

Für die frisch hergestellte Dispersion wurde ein Glanzwert von 148, und für die gelagerte Dispersion ein Glanzwert von 138 gemessen.

## Patentansprüche

1. Als Dispergierharze geeignete polymere Massen I, erhältlich durch Umsetzung von
einem Polymerisat II aus
a) 80 bis knapp 100 mol-% eines oder mehrerer C₁-C₂₅-Alkylester einer α,β-ungesättigten Carbonsäure,
b) 0 bis 20 mol- % eines oder mehrerer weiterer Monomerer und
c) einem Starter und/oder Regler, durch welchen die Mehrzahl der Polymerketten des Polymerisats II an einem ihrer Enden durch eine Hydroxylgruppe terminiert wird,
mit einem mehrwertigen nicht-aromatischen Isocyanat III zu einem Umsetzungsprodukt IV, wobei die Menge der Isocyanatgruppen 1,2 bis 3,9 mol pro Mol der Hydroxylgruppen von II beträgt,
dadurch gekennzeichnet, daß
das Umsetzungsprodukt IV mit einer gegenüber Isocyanaten reaktive Gruppen enthaltenden Verbindung V, die ausgewählt ist aus der Gruppe bestehend aus Thioaminen, Aminoalkoholen und mehrwertigen nicht-aromatischen Aminen oder einem Gemisch daraus, zu einem Umsetzungsprodukt VI umgesetzt wird, wobei die Menge der reaktiven Gruppen 2 bis 7 mol pro Mol der in IV noch vorhandenen freien Isocyanatgruppen beträgt, und das Umsetzungsprodukt VI mit einer Verbindung VII, die im Molekül eine oder mehrere saure Gruppen trägt, oder aus der Gruppe bestehend aus Estern oder Salzen von Säuren ausgewählt ist, oder einem Gemisch daraus, zum Polymerisat I umgesetzt wird.

2. Als Dispergierharze geeignete polymere Massen I, erhältlich durch Umsetzung von
einem Polymerisat II aus
a) 80 bis knapp 100 mol- % eines oder mehrerer C₁ - C₂₅-Alkylester einer α,β-ungesättigten Carbonsäure,
b) 0 bis 20 mol-% eines oder mehrerer weiterer Monomerer und
c) einem Starter und/oder Regler, durch welchen die Mehrzahl der Polymerketten des Polymerisats II an einem ihrer Enden durch eine Hydroxylgruppe terminiert wird,
mit einem mehrwertigen, nicht-aromatischen Isocyanat III zu einem Umsetzungsprodukt IV, wobei die Menge der Isocyanatgruppen 1,2 bis 3,9 mol pro Mol der Hydroxylgruppen von II beträgt,
dadurch gekennzeichnet, daß
das Umsetzungsprodukt IV mit einer gegenüber Isocyanaten reaktive Gruppen enthaltenden Verbindung VIII, die ausgewählt ist aus der Gruppe bestehend aus Phosphorsäureestern, Phosphonsäureestern und Salzen von Sulfonsäurederivaten, oder einem Gemisch daraus, zum Polymerisat I umgesetzt wird.

3. Polymere Massen nach Anspruch 1, erhältlich aus einem inneren Carbonsäureanhydrid einer mehrwertigen Carbonsäure als Verbindung VII.

4. Polymere Massen nach Anspruch 3, erhältlich aus Maleinsäureanhydrid, Bernsteinsäureanhydrid, Phtalsäureanhydrid oder Adipinsäureanhydrid als Verbindung VII.

5. Polymere Massen nach den Ansprüchen 1, 3 und 4, erhältlich aus einem nicht-aromatischen mehrwertigen Amin als Verbindung V.

6. Polymere Massen nach den Ansprüchen 1, 3, 4 und 5, erhältlich aus einem mehrwertigen Amin der Formel
H₂N(-CH₂-CH₂-NH)ₓ-H
in der x einen Wert von 2 bis 6 hat, oder der Formel
H₂N-CH₂-CH₂-CH₂-NH (-CH₂-CH₂-NH)_{y}-CH₂-CH₂-CH₂-NH₂
in der y einen Wert von 0 bis 4 hat,
als Verbindung V.

7. Polymere Massen nach Anspruch 1, erhältlich aus N-Methylaminoethanol als Verbindung V.

8. Verfahren zur Herstellung der polymeren Massen gemäß den Ansprüchen 1 und 3 bis 7,
dadurch gekennzeichnet, daß man ein Polymerisat II aus
a) 80 bis knapp 100 mol-% eines oder mehrerer C₁-C₂₅-Alkylester einer α,β-ungesättigten Carbonsäure,
b) 0 bis 20 mol-% eines oder mehrerer weiterer Monomerer und
c) einem Starter und/oder Regler, durch welchen die Mehrzahl der Polymerketten des Polymerisats II an einem ihrer Enden durch eine Hydroxylgruppe terminiert wird,
mit einem mehrwertigen nicht-aromatischen Isocyanat III zu einem Umsetzungsprodukt IV umsetzt, wobei die Menge der Isocyanatgruppen 1,2 bis 3,9 mol pro Mol der Hydroxylgruppen in II beträgt, und das Umsetzungsprodukt IV mit einer gegenüber Isocyanaten reaktive Gruppen enthaltenden Verbindung V, die ausgewählt ist aus der Gruppe bestehend aus Thioaminen, Aminoalkoholen und mehrwertigen nicht-aromatischen Aminen oder einem Gemisch daraus, zu einem Umsetzungsprodukt VI umsetzt, wobei die Menge der reaktiven Gruppen 2 bis 7 mol pro Mol der in IV noch vorhandenen freien Isocyanat-Gruppen beträgt, und das Umsetzungsprodukt VI mit einer Verbindung VII, die im Molekül eine oder mehrere saure Gruppen trägt, oder aus der Gruppe bestehend aus Estern oder Salzen von Säuren ausgewählt ist, oder einem Gemisch daraus, zum Polymerisat I umsetzt.

9. Verfahren zur Herstellung der polymeren Massen I gemäß Anspruch 2,
dadurch gekennzeichnet, daß man ein Polymerisat II aus
a) 80 bis knapp 100 mol-% eines oder mehrerer C₁-C₂₅-Alkylester einer α,β-ungesättigten Carbonsäure,
b) 0 bis 20 mol-% eines oder mehrerer weiterer Monomerer und
c) einem Starter und/oder Regler, durch welchen die Mehrzahl der Polymerketten des Polymerisats II an einem ihrer Enden durch eine Hydroxylgruppe terminiert wird,
mit einem mehrwertigen nicht-aromatischen Isocyanat III zu einem Umsetzungsprodukt IV umsetzt, wobei die Menge der Isocyanatgruppen 1,2 bis 3,9 mol pro Mol der Hydroxylgruppen in II beträgt,
und das Umsetzungsprodukt IV mit einer gegenüber Isocyanaten reaktive Gruppen enthaltenden Verbindung VIII, die ausgewählt ist aus der Gruppe bestehend aus Phosphorsäureestern, Phosphonsäureestern und Salzen von Sulfonsäurederivaten, oder einem Gemisch daraus, zum Polymerisat I umsetzt.

10. Verwendung der polymeren Massen gemäß den Ansprüchen 1 und 3 bis 8 als Dispergierharze für Pigmentzubereitungen und pigmenthaltige Beschichtungen.

11. Verwendung der polymeren Massen gemäß den Ansprüchen 2 und 9 als Dispergierharze für Pigmentzubereitungen und pigmenthaltige Beschichtungen.

12. Verwendung der polymeren Massen gemäß den Ansprüchen 1, 3 bis 8 und 10 als Dispergierharze für Magnetpigmente enthaltende Aufzeichnungsmaterialien.

13. Verwendung der polymeren Massen gemäß den Ansprüchen 2, 9 und 11 als Dispergierharze für Magnetpigmente enthaltende Aufzeichnungsmaterialien.

14. Pigmentzubereitungen aus einem Pigment und einer polymeren Masse gemäß den Ansprüchen 1, und 3 bis 8.

15. Pigmentzubereitungen aus einem Pigment und einer polymeren Masse gemäß den Ansprüchen 2 und 9.

16. Pigmentzubereitung nach Anspruch 14, in der das Pigment ein Magnetpigment ist.

17. Pigmentzubereitung nach Anspruch 15, in der das Pigment ein Magnetpigment ist.

18. Magnetische Aufzeichnungsmaterialien, enthaltend Magnetpigmente, die mit den polymeren Massen gemäß den Ansprüchen 1, und 3 bis 8 als Dispergierharze ausgerüstet sind.

19. Magnetische Aufzeichnungsmaterialien, enthaltend Magnetpigmente, die mit den polymeren Massen gemäß den Ansprüchen 2 und 9 als Dispergierharze ausgerüstet sind.

## Claims

1. A polymeric material I which is suitable as a dispersing resin and is obtainable by reacting
a polymer II of
a) from 80 to almost 100 mol% of one or more C₁-C₂₅-alkyl esters of an α,β-unsaturated carboxylic acid,
b) from 0 to 20 mol% of one or more further monomers and
c) an initiator and/or regulator by means of which the majority of the polymer chains of the polymer II are terminated at one of their ends by a hydroxyl group,
with a polyfunctional nonaromatic isocyanate III to give a reaction product IV, the amount of isocyanate groups being from 1.2 to 3.9 mol per mole of the hydroxyl groups of II, characterized by reacting the reaction product IV with a compound V, containing groups reactive toward isocyanates and which is selected from the group consisting of thioamines, amino alcohols and polyfunctional nonaromatic amines or a mixture thereof, to give a reaction product VI, the amount of reactive groups being from 2 to 7 mol per mole of the free isocyanate groups still present in IV, and reacting the reaction product VI with a compound VII, which carries in the molecule one or more acidic groups or is selected from the group consisting of esters or salts of acids or a mixture thereof, to give the polymer I.

2. A polymeric material I which is suitable as a dispersing resin and is obtainable by reacting
a polymer II of
a) from 80 to almost 100 mol% of one or more C₁-C₂₅-alkyl esters of an α,β-unsaturated carboxylic acid,
b) from 0 to 20 mol% of one or more further monomers and
c) an initiator and/or regulator by means of which the majority of the polymer chains of the polymer II are terminated at one of their ends by a hydroxyl group,
with a polyfunctional nonaromatic isocyanate III to give a reaction product IV, the amount of isocyanate groups being from 1.2 to 3.9 mol per mole of the hydroxyl groups of II, characterized by reacting the reaction product IV with a compound VIII, containing groups reactive toward isocyanates and which is selected from the group consisting of phosphoric acid, phosphonates and salts of sulfonic acid derivatives or a mixture thereof, to give the polymer I.

3. A polymeric material as claimed in claim 1, obtainable from an internal anhydride of a polybasic carboxylic acid as compound VII.

4. A polymeric material as claimed in claim 3, obtainable from maleic anhydride, succinic anhydride, phthalic anhydride or adipic anhydride as compound VII.

5. A polymeric material as claimed in any of claims 1, 3 and 4, obtainable from a nonaromatic polyfunctional amine as compound V.

6. A polymeric material as claimed in any of claims 1, 3, 4 and 5, obtainable from a polyfunctional amine of the formula
H₂N(-CH₂-CH₂-NH)ₓ-H
where x is from 2 to 6, or of the formula
H₂N-CH₂-CH₂-CH₂-NH(-CH₂-CH₂-NH)_{y}-CH₂-CH₂-CH₂-NH₂
where y is from 0 to 4,
as compound V.

7. A polymeric material as claimed in claim 1, obtainable from N-methylaminoethanol as compound V.

8. A process for the preparation of a polymeric material as claimed in any of claims 1 and 3 to 7, which comprises reacting a polymer II of
a) from 80 to almost 100 mol% of one or more C₁-C₂₅-alkyl esters of an α,β-unsaturated carboxylic acid,
b) from 0 to 20 mol% of one or more further monomers and
c) an initiator and/or regulator by means of which the majority of the polymer chains of the polymer II are terminated at one of their ends by a hydroxyl group,
with a polyfunctional nonaromatic isocyanate III to give a reaction product IV, the amount of isocyanate groups being from 1.2 to 3.9 mol per mole of the hydroxyl groups in II, and reacting the reaction product IV with a compound V, containing groups reactive toward isocyanates and which is selected from the group consisting of thioamines, amino alcohols and polyfunctional nonaromatic amines or a mixture thereof, to give a reaction product VI, the amount of reactive groups being from 2 to 7 mol per mole of the free isocyanate groups still present in IV, and reacting the reaction product VI with a compound VII, which carries in the molecule one or more acidic groups or is selected from the group consisting of esters or salts of acids or a mixture thereof, to give the polymer I.

9. A process for the preparation of a polymeric material I as claimed in claim 2, which comprises reacting a polymer II of
a) from 80 to almost 100 mol% of one or more C₁-C₂₅-alkyl esters of an α,β-unsaturated carboxylic acid,
b) from 0 to 20 mol% of one or more further monomers and
c) an initiator and/or regulator by means of which the majority of the polymer chains of the polymer II are terminated at one of their ends by a hydroxyl group,
with a polyfunctional nonaromatic isocyanate III to give a reaction product IV, the amount of isocyanate groups being from 1.2 to 3.9 mol per mole of the hydroxyl groups in II, and reacting the reaction product IV with a compound VIII, containing groups reactive toward isocyanates and which is selected from the group consisting of phosphates, phosphonates and salts of sulfonic acid derivatives or a mixture thereof, to give the polymer I.

10. Use of a polymeric material as claimed in any of claims 1 and 3 to 8 as a dispersing resin for pigment formulations and pigment-containing coatings.

11. Use of a polymeric material as claimed in either of claims 2 and 9 as a dispersing resin for pigment formulations and pigment-containing coatings.

12. Use of a polymeric material as claimed in any of claims 1, 3 to 8 and 10 as a dispersing resin for recording materials containing magnetic pigments.

13. Use of a polymeric material as claimed in any of claims 2, 9 and 11 as a dispersing resin for recording materials containing magnetic pigments.

14. A pigment formulation comprising a pigment and a polymeric material as claimed in any of claims 1 and 3 to 8.

15. A pigment formulation comprising a pigment and a polymeric material as claimed in either of claims 2 and 9.

16. A pigment formulation as claimed in claim 14, in which the pigment is a magnetic pigment.

17. A pigment formulation as claimed in claim 15, in which the pigment is a magnetic pigment.

18. A magnetic recording material containing a magnetic pigment which is treated with a polymeric material as claimed in any of claims 1 and 3 to 8 as a dispersing resin.

19. A magnetic recording material containing a magnetic pigment which is treated with a polymeric material as claimed in either of claims 2 and 9 as a dispersing resin.

## Revendications

1. Compositions polymères I appropriées en tant que résines de dispersion et pouvant être obtenues par réaction de
un polymère II comprenant
a) de 80 à presque 100% en moles d'un ou de plusieurs esters alkyliques en C₁-C₂₅ d'un acide carboxylé α, β-insaturé,
b) de 0 à 20% en moles d'un ou de plusieurs autres monomères et
c) un amorceur et/ou un régulateur grâce auxquels la majeure partie des chaînes polymères du polymère II est terminée par un groupe hydroxy à l'une de ses extrémités,
avec un isocyanate polyfonctionnel non-aromatique III pour donner un produit de réaction IV, la quantité de groupes isocyanate étant de 1,2 à 3,9 mol par mole de groupes hydroxy de II, caractérisées en ce que
le produit de réaction IV est mis à réagir avec un composé V renfermant des groupes réactifs vis-à-vis des isocyanates, qui est choisi parmi le groupe constitué de thioamines, d'aminoalcools et d'amines polyfonctionnelles non-aromatiques ou d'un mélange de ceux-ci, pour donner un produit de réaction VI, la quantité de groupes réactifs étant de 2 à 7 mol par mole de groupes isocyanate libres encore présents dans IV, et le produit de réaction VI est mis à réagir avec un composé VII renfermant un ou plusieurs groupes acides dans la molécule, ou qui est choisi parmi le groupe constitué d'esters ou de sels d'acides ou d'un mélange de ceux-ci, pour donner le polymère I.

2. Compositions polymères I appropriées en tant que résines de dispersion et pouvant être obtenues par réaction de
un polymère II comprenant
a) de 80 à presque 100% en moles d'un ou de plusieurs esters alkyliques en C₁-C₂₅ d'un acide carboxylé α, β-insaturé,
b) de 0 à 20% en moles d'un ou de plusieurs autres monomères et
c) un amorceur et/ou un régulateur grâce auxquels la majeure partie des chaînes polymères du polymère II est terminée par un groupe hydroxy à l'une de ses extrémités,
avec un isocyanate polyfonctionnel non-aromatique III pour donner un produit de réaction IV, la quantité de groupes isocyanate étant de 1,2 à 3,9 mol par mole de groupes hydroxy de II, caractérisées en ce que
le produit de réaction IV est mis à réagir avec un composé VIII renfermant des groupes réactifs vis-à-vis des isocyanates, qui est choisi parmi le groupe constitué de l'acide phosphorique, d'esters d'acide phosphonique et de sels de dérivés d'acide sulfonique ou d'un mélange de ceux-ci, pour donner lieu au polymère I.

3. Compositions polymères selon la revendication 1, pouvant être obtenues à partir d'un anhydride carboxylique interne d'un acide carboxylique polyfonctionnel en tant que composé VII.

4. Compositions polymères selon la revendication 3, pouvant être obtenues à partir de l'anhydride maléique, de l'anhydride succinique, de l'anhydride phtalique ou de l'anhydride adipique en tant que composé VII.

5. Compositions polymères selon les revendications 1, 3 et 4, pouvant être obtenues à partir d'une amine polyfonctionnelle non-aromatique en tant que composé V.

6. Compositions polymères selon les revendications 1, 3, 4 et 5, pouvant être obtenues à partir d'une amine polyfonctionnelle de formule
H₂N(-CH₂-CH₂-NH)ₓ-H
dans laquelle x vaut de 2 à 6, ou de formule
H₂N-CH₂-CH₂-CH₂-NH (-CH₂-CH₂-NH)_{y}-CH₂-CH₂-CH₂-NH₂
dans laquelle y vaut de 0 à 4,
en tant que composé V.

7. Compositions polymères selon la revendication 1, pouvant être obtenues à partir de N-méthylaminoéthanol en tant que composé V.

8. Procédé de préparation des compositions polymères selon les revendications 1 et 3 à 7,
caractérisé en ce que l'on fait réagir un polymère II comprenant
a) de 80 à presque 100% en moles d'un ou de plusieurs esters alkyliques en C₁-C₂₅ d'un acide carboxylé α,β-insaturé,
b) de 0 à 20% en moles d'un ou de plusieurs autres monomères et
c) un amorceur et/ou un régulateur grâce auxquels la majeure partie des chaînes polymères du polymère II est terminée par un groupe hydroxy à l'une de ses extrémités,
avec un isocyanate polyfonctionnel non-aromatique III pour donner un produit de réaction IV, la quantité de groupes isocyanate étant de 1,2 à 3,9 mol par mole de groupes hydroxy dans II, et le produit de réaction IV est mis à réagir avec un composé V renfermant des groupes réactifs vis-à-vis des isocyanates, qui est choisi parmi le groupe constitué de thioamines, d'aminoalcools et d'amines polyfonctionnelles non-aromatiques ou d'un mélange de ceux-ci, pour donner un produit de réaction VI, la quantité de groupes réactifs étant de 2 à 7 mol par mole de groupes isocyanate libres encore présents dans IV, et le produit de réaction VI est mis à réagir avec un composé VII renfermant un ou plusieurs groupes acides dans la molécule, ou qui est choisi parmi le groupe constitué d'esters ou de sels d'acides ou d'un mélange de ceux-ci, pour donner le polymère I.

9. Procédé de préparation des compositions polymères I selon la revendication 2,
caractérisé en ce que l'on fait réagir un polymère II comprenant
a) de 80 à presque 100% en moles d'un ou de plusieurs esters alkyliques en C₁-C₂₅ d'un acide carboxylé *α*,β-insaturé,
b) de 0 à 20% en moles d'un ou de plusieurs autres monomères et
c) un amorceur et/ou un régulateur grâce auxquels la majeure partie des chaînes polymères du polymère II est terminée par un groupe hydroxy à l'une de ses extrémités,
avec un isocyanate polyfonctionnel non-aromatique III pour donner un produit de réaction IV, la quantité de groupes isocyanate étant de 1,2 à 3,9 mol par mole de groupes hydroxy dans II, et le produit de réaction IV est mis à réagir avec un composé VIII renfermant des groupes réactifs vis-à-vis des isocyanates, qui est choisi parmi le groupe constitué d'esters d'acide phosphorique, d'estess d'acide phosphonique et de sels de dérivés d'acide sulfonique, ou d'un mélange de ceux-ci, pour donner le polymère I.

10. Utilisation des compositions polymères selon les revendications 1 et 3 à 8 en tant que résines de dispersion pour des préparations de pigments et des revêtements contenant des pigments.

11. Utilisation des compositions polymères selon les revendications 2 et 9 en tant que résines de dispersion pour des préparations de pigments et des revêtements contenant des pigments.

12. Utilisation des compositions polymères selon les revendications 1, 3 à 8 et 10 en tant que résines de dispersion pour des matériaux d'impression contenant des pigments magnétiques.

13. Utilisation des compositions polymères selon les revendications 2, 9 et 11 en tant que résines de dispersion pour des matériaux d'impression contenant des pigments magnétiques.

14. Préparation de pigment comprenant un pigment et une composition polymère selon les revendications 1, et 3 à 8.

15. Préparation de pigment comprenant un pigment et une composition polymère selon les revendications 2 et 9.

16. Préparation de pigment selon la revendication 14, dans laquelle le pigment est un pigment magnétique.

17. Préparation de pigment selon la revendication 15, dans laquelle le pigment est un pigment magnétique.

18. Matériaux d'impression magnétiques contenant des pigments magnétiques qui sont apprêtés par les compositions polymères selon les revendications 1, et 3 à 8 en tant que résines de dispersion.

19. Matériaux d'impression magnétiques contenant des pigments magnétiques qui sont apprêtés par les compositions polymères selon les revendications 2 et 9 en tant que résines de dispersion.
